# EUROPÄISCHE PATENTSCHRIFT

(11) **EP 0 771 522 B1**
(45) Veröffentlichungstag und Bekanntmachung des Hinweises auf die Patenterteilung: **12.12.2001**
(21) Anmeldenummer: 96116968.7
(22) Anmeldetag: 23.10.1996
(51) Int. Cl.: A01F 15/08

(54) **Ballenpresse**
Baler
Presse à balles

(30) Priorität: 03.11.1995 DE 29517425 U
(43) Veröffentlichungstag der Anmeldung: 07.05.1997
(73) Patentinhaber: Maschinenfabrik Bernard Krone GmbH, 48480 Spelle (DE)
(72) Erfinder: Krone, Bernard, 48480 Spelle (DE); Pöppe, Friedhelm, 48480 Spelle (DE)

(56) Entgegenhaltungen:
- DE-B- 1 175 932
- FR-A- 1 212 136
- US-A- 3 974 632
- CLAAS: "quadrant 1100 150/247.419.5" , FIRMA CLAAS , 11-93 XP002023162 * Seite 11 - Seite 13 *

## Beschreibung

Die Erfindung bezieht sich auf eine Ballenpresse zur Erzeugung rechteckiger Ballen aus Heu, Stroh, angewelktem Grüngut oder dgl. landwirtschaftlichem Erntegut gemäß dem Oberbegriff des Anspruchs 1.

Bei einer derartigen und für sich bekannten Ballenpresse schließt sich an den Preßkanal eine zweiteilige Ablagevorrichtung in Form einer zum Erdboden hin geneigten Ballenrutsche zur schonenden Ablage der Ballen auf dem Erdboden an. In einem Prospekt mit der Nummer 150/247.419.5 (11/93) der Firma Claas ist eine Ballenpresse des Typs "Quadrant 1100" dargestellt, die mit der eingangs beschriebenen Ablagevorrichtigung ausgerüstet ist. Für den Transport der Ballenpresse auf der Straße oder bei Fahrten zum nächsten Feld muß die Ablagevorrichtung aus ihrer Arbeits- und Betriebsstellung in eine Transportstellung überführt werden. Dazu sind die beiden Teile der Ablagevorrichtung zunächst übereinander zu klappen und dann aus der in etwa horizontalen bzw. leicht geneigten Zwischenstellung in eine nahezu vertikale Transportstellung zu schwenken. Diese Tätigkeit erfordert vom Bediener einen erheblichen Kraft- und Arbeitsaufwand, so daß häufig bei Fahrten zum nächsten Feld die Umstellung der Ablagevorrichtung in die Transportstellung unterbleibt. Das führt zu mangelnder Betriebssicherheit bzw. erhöhter Unfallgefahr.

Aus der US-A-3,974,632 ist eine Rundballenpresse zur Erzeugung runder Ballen aus Heu, Stroh, angewelktem Grüngut oder dgl. landwirtschaftlichem Erntegut bekannt, an deren Ballenkammer sich eine zweigeteilte Ballenrutsche anschließt, die mittels einer Betätigungsvorrichtung aus einer zum Erdboden hin geneigten Ausbringstellung in eine die Ballenkammer mit verschließende Betriebs- und Transportstellung zu überführen ist. Dabei sind beide Abschnitte der Ballenrutsche über die Betätigungsvorrichtung gemeinsam zu heben und abzusenken, wobei aufgrund einer gelenkigen Verbindung zwischen einem hinteren und einem vorderen Abschnitt eine gewisse Lagewinkelveränderung zwischen dem hinteren und dem vorderen Abschnitt der Ballenrutsche ermöglicht ist, um eine der runden Form der Rundballenpresse angepaßte Schließstellung einnehmen zu können. Eine vertikale Lage zum vorderen Abschnitt der Ballenrutsche oder gar eine an dieser anliegende Lage des hinteren Abschnittes an dem vorderen Abschnitt ist mit dieser Betätigungsvorrichtung jedoch nicht zu vollziehen.

Der Erfindung liegt daher die Aufgabe zugrunde, eine Ballenpresse der eingangs genannten Art mit einer Vorrichtung zur Überführung einer mehrteiligen Ablagevorrichtung für Ballen aus einer Arbeits- und Betriebsstellung in eine Transportstellung und zurück zu schaffen, welche von einem Bediener einfach und mühelos zu handhaben, benutzerfreundlich und mit einem minimalen Bauaufwand herstellbar ist. Weiterhin soll dadurch die Betriebssicherheit der Ballenpresse verbessert werden.

Diese Erfindung wird bei einer Ballenpresse der eingangs genannten Art durch die im kennzeichnenden Teil des Anspruchs 1 aufgeführten Merkmale gelöst. Hinsichtlich der weiteren Ausgestaltung der Erfindung wird auf die Ansprüche 2 bis 6 verwiesen.

Bei einer erfindungsgemäßen Ballenpresse schließt sich an das Ende eines einen Preßkanal umgebenden Gehäuses eine aus zwei oder mehreren Abschnitten bestehende Ablagevorrichtung zur schonenden Ablage der fertiggestellten Ballen auf dem Erdboden an. Zur Überführung aus einer in etwa horizontal bzw. in Preßrichtung des Preßkolbens gesehen, zum Erdboden hin leicht geneigten Arbeits- und Betriebsstellung in eine Transportstellung und zurück ist der Ablagevorrichtung eine Betätigungsvorrichtung zugeordnet, so daß diese vor jeder Fahrt zum nächsten Feld oder jeder Straßenfahrt durchzuführende Tätigkeit vom Bediener ohne jeglichen Kraftaufwand in einer benutzerfreundlichen Art und Weise ausgeführt werden kann.

Zum sicheren und verkehrsgerechten Transport einer Ballenpresse mit einer aus zwei oder mehreren Abschnitten gebildeten Ablagevorrichtung sind gleich mehrere Transportstellungen möglich. Beim Transport eines Restballens im Preßkanal der Ballenpresse ist es zweckmäßig, den entgegen der Preßrichtung gesehen, hinteren Abschnitt der Ablagevorrichtung aus seiner Strecklage mit dem vorderen Abschnitt um eine horizontal und quer zur Preßrichtung ausgerichtete Schwenkachse in eine nahezu vertikale nach oben zeigende Lage zu verschwenken. Dadurch wird einerseits der Restballen gegen ein unbeabsichtigtes Hinausrutschen aus dem Preßkanal gesichert und andererseits wird die über hintere Begrenzungsleuchten überstehende Ablagevorrichtung in ihrer Länge soweit reduziert, daß ein in der Straßenverkehrszulassungsordnung zulässiger Überstand eingehalten wird.

Beim Transport der Ballenpresse mit leerem Preßkanal wird der in Preßrichtung gesehen, hintere Abschnitt der Ablagevorrichtung um eine horizontal und quer zur Preßrichtung ausgerichtete Schwenkachse aus seiner Strecklage mit dem vorderen Abschnitt in eine an der Oberseite des vorderen Abschnittes anliegende Lage geklappt, so daß anschließend beide Abschnitte aus einer in etwa horizontal bzw. in Preßrichtung leicht geneigten Lage in eine nahezu vertikale nach oben zeigende Lage überführt werden können. Somit ist eine Transportstellung der Ablagevorrichtung erreicht, bei der der Überstand über hintere Begrenzungsleuchten der Ballenpresse auf ein Minimum reduziert wird.

Zur Überführung aus der Arbeits- und Betriebsstellung in die Transportstellung ist der Ablagevorrichtung eine Betätigungsvorrichtung zugeordnet, die aus einem viergelenkigen Koppelgetriebe, einem das Koppelgetriebe antreibenden und als Schubstange ausgebildeten Übertragungsmittel und einem eine Zug- und/oder Druckkraft erzeugenden Stellglied besteht. Das Zug- und/oder Druckkraft erzeugende Stellglied kann dabei als hydraulische Kolben-Zylinder-Anordnung oder als elektrischer Linearantriebsmotor ausgeführt sein. Beim Überführungsvorgang aus der Arbeits- und Betriebsstellung in die Transportstellung wird über das Zug- und/oder Druckkraft erzeugende Stellglied infolge einer Druckkraft die Schubstange aus einer ersten Anschlagposition einer Langlochführung in Preßrichtung der Ballenpresse bewegt, wobei über das Koppelgetriebe eine Schwenkbewegung des hinteren Abschnittes der Ablagevorrichtung in seiner Scharnierverbindung mit dem vorderen Abschnitt im Uhrzeigersinn bei einer Betrachtungsweise mit von rechts nach links gerichteter Preßrichtung der Ballenpresse einsetzt. Beim Erreichen einer zweiten Anschlagposition der Langlochführung der Schubstange befindet sich der hintere Abschnitt der Ablagevorrichtung in einer an der Oberseite des vorderen Abschnittes anliegenden Lage. Beim fortgesetzten Antrieb durch das Zug- und /oder Druckkraft erzeugende Stellglied werden beide Abschnitte der Ablagevorrichtung aus der in etwa horizontalen bzw. leicht geneigten Lage in eine nahezu vertikale Lage bewegt. Zur Überführung aus der Transportstellung in die Arbeits- und Betriebsstellung muß vom Zug- und/oder Druckkraft erzeugenden Stellglied eine Zugkraft aufgebracht werden. Somit ist es möglich, mit einer hydraulischen Kolben-Zylinder-Anordnung oder mit einem elektrischen Linearantriebsmotor die Ablagevorrichtung in eine Transportstellung zu bringen, in der hinsichtlich der Wendigkeit der Ballenpresse und der Betriebssicherheit alle Anforderungen erfüllt sind.

Damit zu Beginn des Arbeits- und Preßeinsatzes keine Beschädigung an der sich versehentlich noch in der Transportstellung befindenden Ablagevorrichtung entstehen kann, sind Sicherungselemente vorgesehen. Dies kann beispielsweise ein Druckbegrenzungsventil sein, das in eine Druckleitung eines als hydraulische Kolben-Zylinder-Anordnung ausgebildeten Zug- und/oder Druckkraft erzeugenden Stellgliedes eingesetzt ist.

Die sich am Gehäuse des Preßkanales anschließende Ablagevorrichtung kann erfindungsgemäß als eine in Preßrichtung des Preßkolbens gesehen, zum Erdboden hin geneigte Ballenrutsche ausgebildet sein, welche entweder mit einer feststehenden Auflagefläche oder mit einer von frei drehbar gelagerten Rollen gebildeten Auflagefläche versehen ist.

Als weitere Ausgestaltung der Erfindung kann es sinnvoll sein, die Überführung der Ablagevorrichtung aus der Arbeits- und Betriebsstellung dadurch einzuleiten, daß der in Preßrichtung gesehen, hintere Abschnitt in seiner Scharnierverbindung zunächst aus der Strecklage mit dem vorderen Abschnitt in eine an der Unterseite des vorderen Abschnittes anliegende Lage gebracht wird, um dann beide Abschnitte aus der in etwa horizontalen Lage in die vertikal ausgerichtete Transportstellung zu schwenken. Weiterhin ist es denkbar, daß sich während der Schwenkbewegung des vorderen Abschnittes aus der in etwa horizontalen Lage in die nahezu vertikale Transportstellung der hintere Abschnitt der Ablagevorrichtung an die Unterseite des vorderen Abschnittes anlegt. Alternativ zu der eingangs beschriebenen Betätigungsvorrichtung könnte auch jeweils eine Kolben-Zylinder-Anordnung zur Betätigung des vorderen und des hinteren Abschnittes der Ablagevorrichtung vorgesehen sein, wobei dann jedoch ein erhöhter Aufwand zur hydraulischen Steuerung der Kolben-Zylinder-Anordnungen erforderlich wird.

Eine detaillierte Beschreibung des Gegenstandes der Erfindung erfolgt nun anhand eines Ausführungsbeispieles. In den dazugehörigen Zeichnungen stellen im einzelnen dar:
- Fig. 1: eine Gesamtseitenansicht einer erfindungsgemäßen Ballenpresse in Fahrtrichtung nach rechts ausgerichtet;
- Fig.2: eine teilweise abgebrochene, vergrößerte Darstellung der Einzelheit X in Fig.1 mit einer Ablagevorrichtung in Arbeits- und Betriebsstellung;
- Fig.3: eine teilweise abgebrochene, vergrößerte Darstellung der Einzelheit X in Fig.1 mit einem in Transportstellung nach oben geschwenkten hinteren Abschnitt einer Ablagevorrichtung bei noch vorhandenem Restballen;
- Fig.4: eine teilweise abgebrochene, vergrößerte Darstellung der Einzelheit X in Fig.1 mit einem an der Oberseite eines vorderen Abschnitts anliegenden, hinteren Abschnitt einer Ablagevorrichtung;
- Fig.5: eine teilweise abgebrochene, vergrößerte Darstellung der Einzelheit X in Fig.1 mit einer Ablagevorrichtung in einer Transportstellung ohne Restballen;
- Fig.6: ein Schaltplan zur Ansteuerung eines als hydraulische Kolben-Zylinder-Anordnung ausgebildeten Zug- und/oder Druckkraft erzeugenden Stellgliedes einer erfindungsgemäßen Betätigungsvorrichtung;

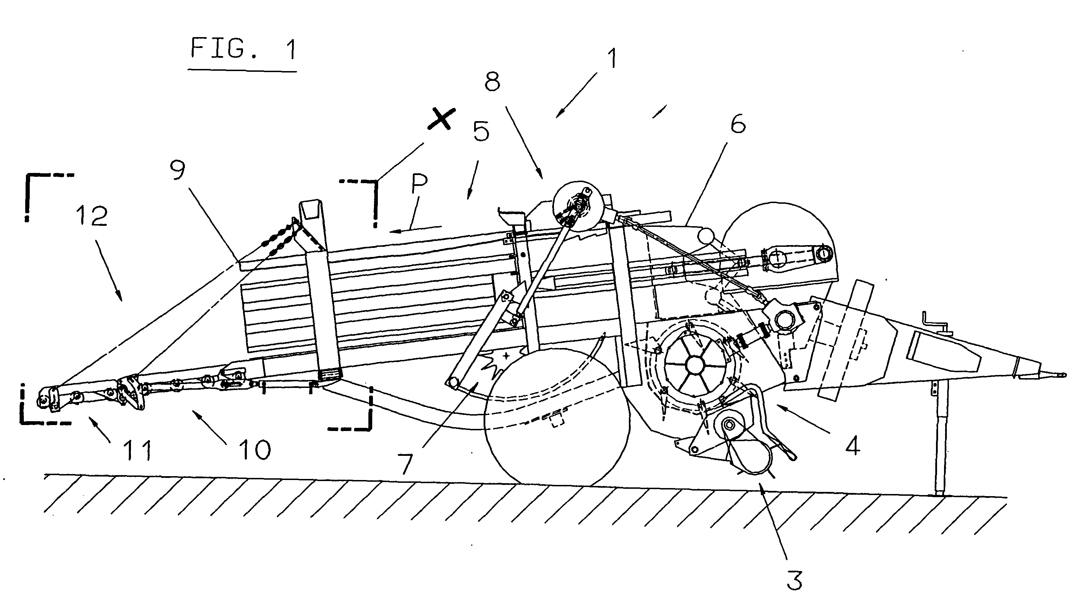

Eine in Fig.1 dargestellte Ballenpresse 1 dient der Erzeugung rechteckiger Ballen 2 aus landwirtschaftlichem Erntegut, wie beispielsweise Heu, Stroh oder angewelktes Halmgut. Die Ballenpresse 1 wird dabei von einem nicht dargestellten landwirtschaftlichen Ackerschlepper oder dgl. Zugmaschine gezogen und über eine ebenfalls nicht dargestellte Gelenkwelle vom Ackerschlepper aus angetrieben. Die Ballenpresse verfügt über eine Aufsammelvorrichtung 3 und eine nachfolgende Fördereinrichtung 4 zur Förderung des Erntegutes in einen Preßkanal 5, in dem durch einen hin- und herbewegbaren Preßkolben 6 das Erntegut zu Ballen 2 gepreßt wird. Eine Meßvorrichtung 7 stellt dabei die Länge des entstehenden Ballens 2 fest und leitet bei Überschreiten einer vorgewählten Länge den Bindevorgang einer Bindevorrichtung 8 ein. Im hinteren Bereich des Preßkanals 5 ist am Gehäuse 9 des Preßkanals 5 eine aus einem entgegen der Preßrichtung P gesehen, vorderen Abschnitt 10 und einem hinteren Abschnitt 11 gebildeten Ablagevorrichtung 12 angebracht, welche der schonenden Ablage fertiggestellter Ballen 2 auf dem Erdboden dient.

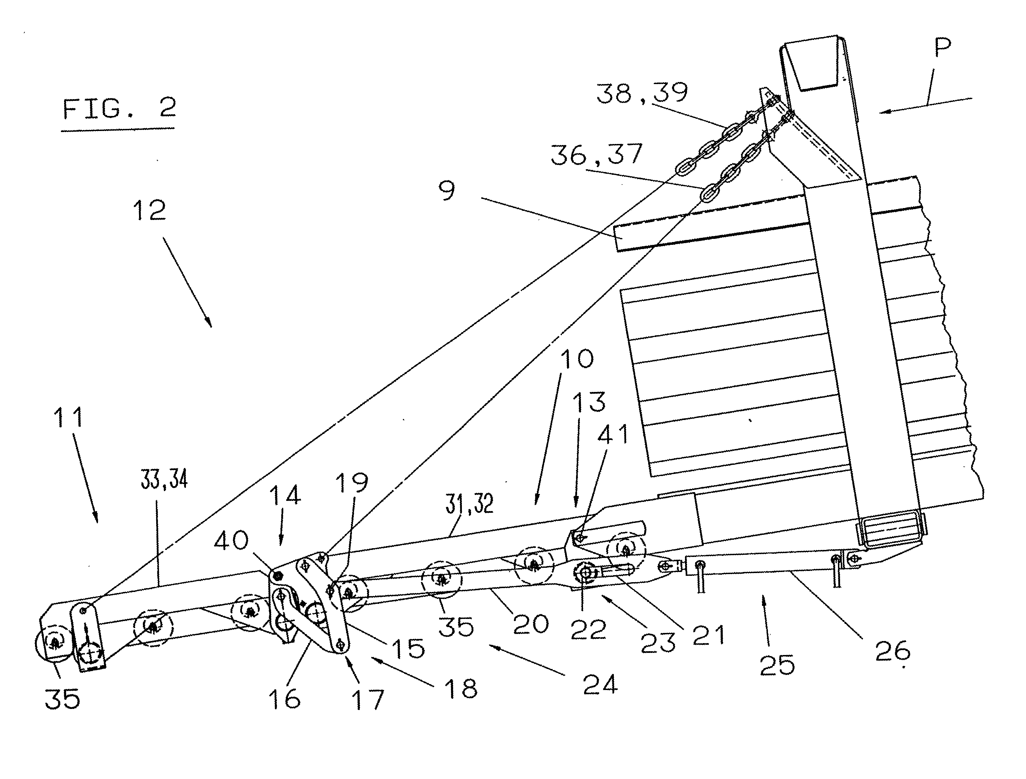

Wie in Fig. 2 bis Fig. 5 näher veranschaulicht wird, ist der vordere Abschnitt 10 der Ablagevorrichtung 12 über eine Scharnierverbindung 13 mit dem Gehäuse 9 des Preßkanals 5 verbunden. Über eine weitere Scharnierverbindung 14 ist der hintere Abschnitt 11 mit dem vorderen Abschnitt 10 gekoppelt. Jeweils über eine Bolzenverbindung sind an einer Längsseite der Ablagevorrichtung 12 und zwar im hinteren Bereich des vorderen Abschnittes 10 sowie im vorderen Bereich des hinteren Abschnittes 11 Hebel 15,16 angelenkt, die ein gemeinsames Koppelgelenk 17 aufweisen. Die Hebel 15,16 sowie der vordere Abschnitt 10 als auch der hintere Abschnitt 11 bilden dabei ein Koppelgetriebe 18. An einem Koppelpunkt 19 des Hebels 15 ist eine Schubstange 20 angelenkt, welche an ihrem anderen Ende mittels einer Langlochführung 21 auf einem mit dem vorderen Abschnitt 10 fest verbundenen und als Stehbolzen 22 ausgebildeten Koppelpunkt 23 verschiebbar angebracht ist. Als Antriebsmittel einer ein Koppelgetriebe 18 und eine Schubstange 20 umfaßenden Betätigungsvorrichtung 24 ist ein Zug- und/oder Druckkraft erzeugendes Stellglied 25 vorgesehen, das als hydraulische Kolben-Zylinder-Anordnung 26 oder als ein elektrischer Linearantriebsmotor ausgeführt sein kann.

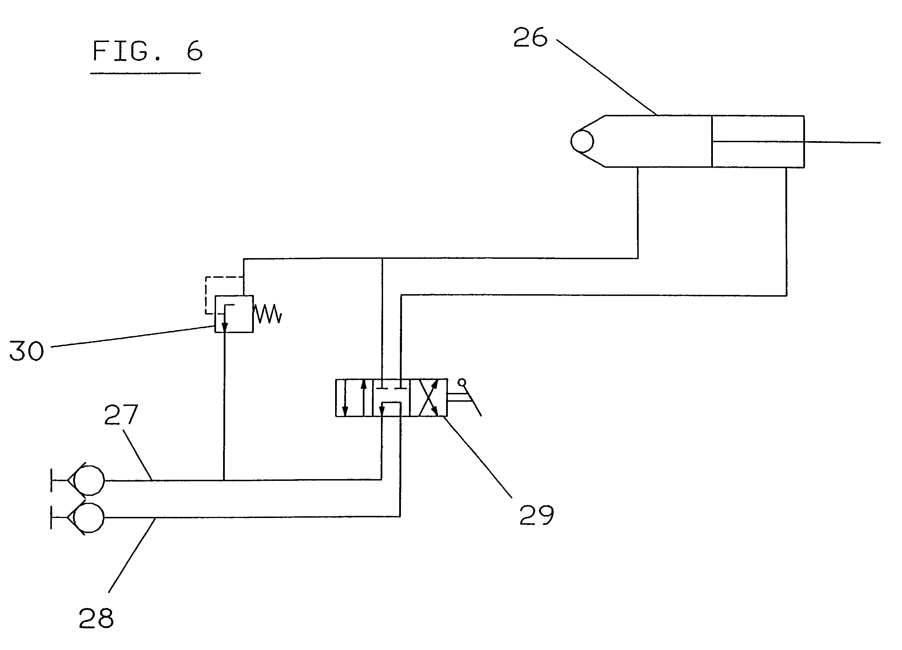

In einem in Fig. 6 dargestellten Schaltplan ist eine Möglichkeit der Ansteuerung des als Kolben-Zylinder-Anordnung 26 ausgebildeten Zug- und/oder Druckkraft erzeugenden Stellgliedes 25 aufgezeigt. Über Druckleitungen 27,28 und einem beispielsweise im hinteren Bereich der Ballenpresse 1 angeordneten Schaltventil 29 kann die Kolben-Zylinder-Anordnung 26 von einem Hydrauliksystem eines landwirtschaftlichen Ackerschleppers mit Druckmittel beaufschlagt werden. Ein parallel zum Schaltventil 29 in der Druckleitung 27 angeordnetes Druckbegrenzungsventil 30 soll dafür Sorge tragen, daß bei einem bereits begonnenen Arbeits- und Preßeinsatz an der sich versehentlich noch in Transportstellung befindenden Ablagevorrichtung 12 keine Beschädigungen auftreten und die Ablagevorrichtung 12 dem aus dem Preßkanal 5 austretenden Ballen 2 ausweichen kann.

Die sich am Gehäuse 9 des Preßkanals 5 anschließende Ablagevorrichtung 12 besteht im wesentlichen aus dem vorderen Abschnitt 10 und dem hinteren Abschnitt 11, wobei diese beiden Abschnitte jeweils von Seitenträgern 31,32 und 33,34 gebildet werden, welche quer zur Preßrichtung P über Verbindungsrohre miteinander verbunden sind. Frei drehbar gelagerte Rollen 35 bilden dabei eine Auflagefläche für die aus dem Preßkanal 5 austretenden, fertiggestellten Ballen 2. Es ist jedoch auch denkbar, daß die beiden Abschnitte der Ablagevorrichtung 12 eine feststehende Auflagefläche aufweisen. In der Arbeits- und Betriebsstellung werden die beiden Abschnitte der Ablagevorrichtung 12 über Ketten 36,37 und 38,39 oder ähnliche Arretierungsmittel in einer in Preßrichtung P gesehen, zum Erdboden leicht geneigten Lage gehalten bzw. können dadurch in ihrer Lage zum Preßkanal 5 verstellt werden.

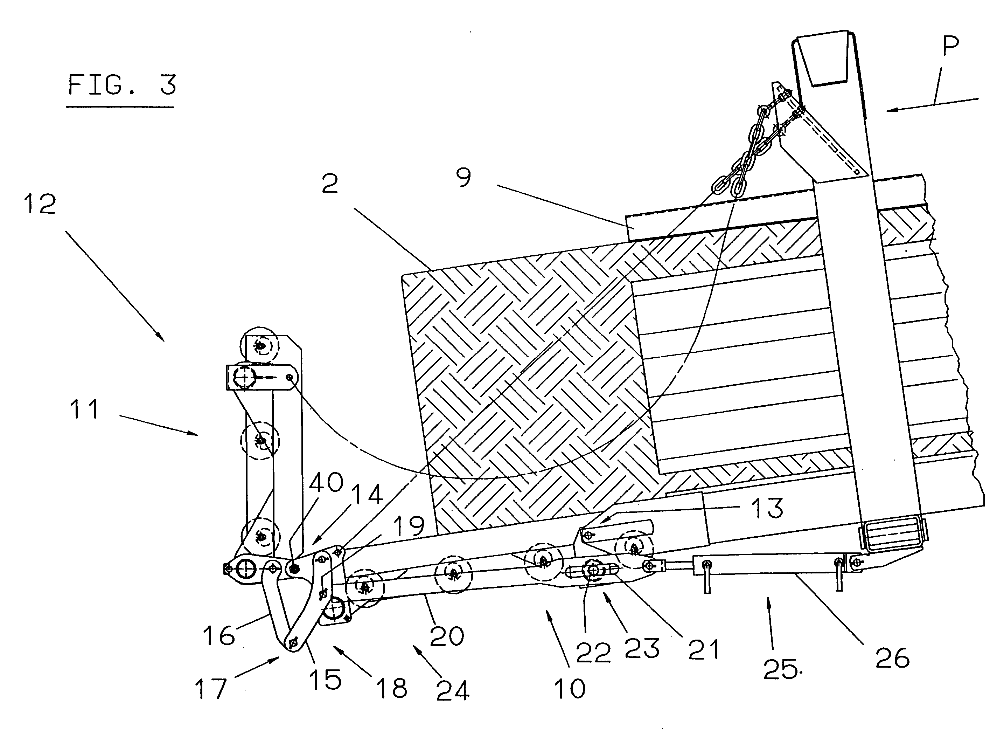

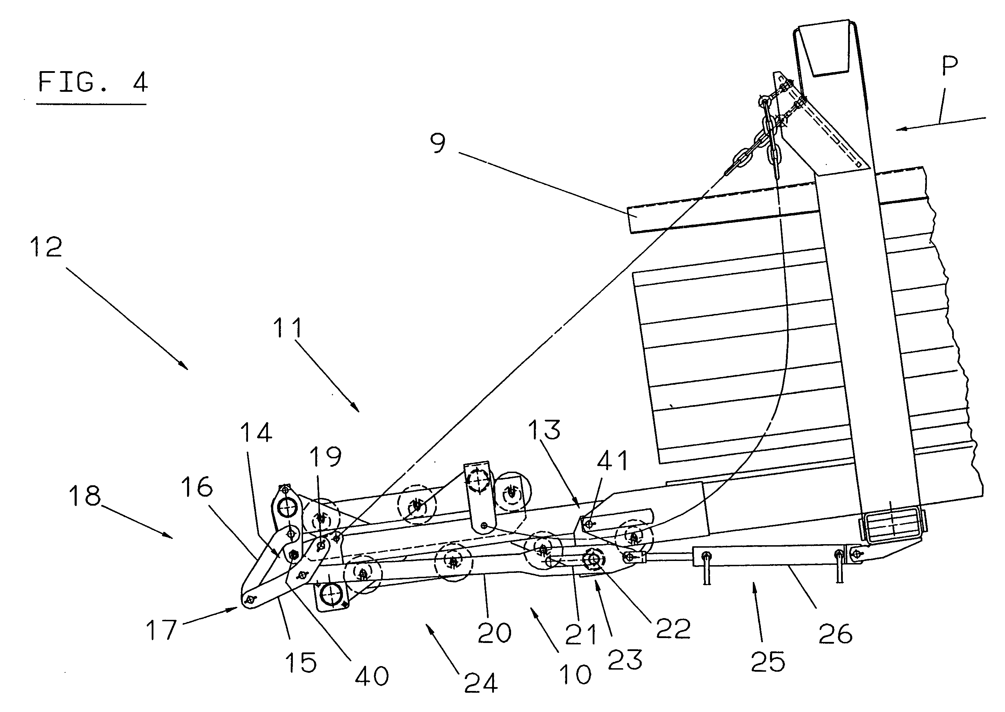

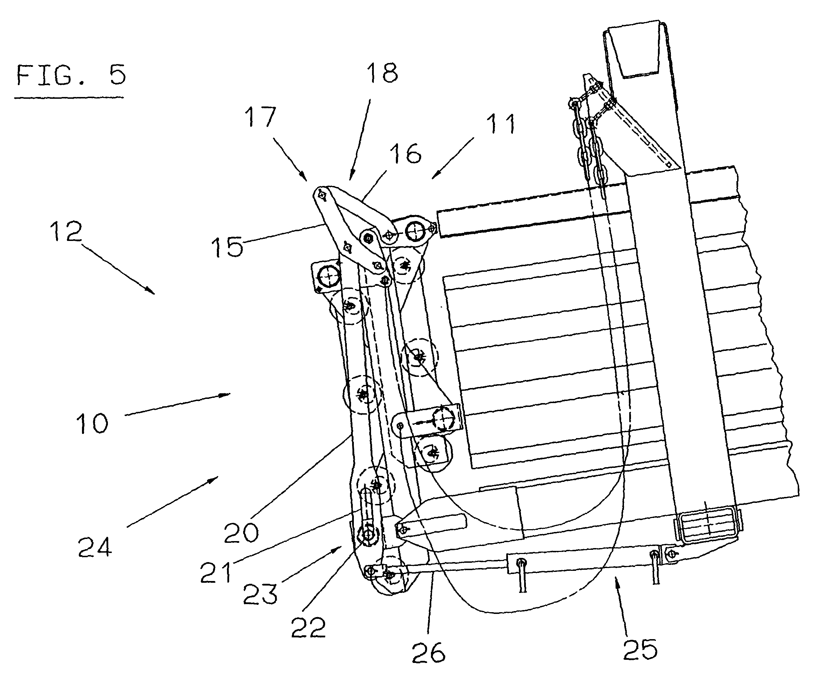

Eine Überführung der Ablagevorrichtung 12 aus der in Fig. 2 dargestellten Arbeits- und Betriebsstellung wird durch ein Beaufschlagen der Kolben-Zylinder-Anordnung 26 mit Druckmittel eingeleitet. Dabei wird durch eine von der Kolben-Zylinder-Anordnung 26 erzeugten Druckkraft die Schubstange 20 aus einer ersten Anschlagposition der Langlochführung 21 in Preßrichtung P verschoben, wobei der hintere Abschnitt 11 der Ablagevorrichtung 12 um eine horizontal und quer zur Preßrichtung ausgerichtete Schwenkachse 40 der Scharnierverbindung 14 aus der Strecklage mit dem vorderen Abschnitt 10 im Uhrzeigersinn verschwenkt wird. Eine erste mögliche Transportstellung ist erreicht, wenn sich der hintere Abschnitt 11 in einer nahezu vertikalen Stellung befindet, so daß bei dieser Stellung des hinteren Abschnittes 11 ein Ballen 2 im Preßkanal 5 verbleiben kann und somit gegen unbeabsichtigtes Hinausrutschen gesichert ist (Fig. 3). Beim Transport einer Ballenpresse mit leerem Preßkanal kann die Schwenkbewegung fortgesetzt werden, bis der hintere Abschnitt 11 eine an der Oberseite des vorderen Abschnittes 10 anliegende Lage einnimmt (Fig. 4). Anschließend können beide Abschnitte der Ablagevorrichtung 12 um eine weitere horizontal und quer zur Preßrichtung P ausgerichtete Schwenkachse 41 der Scharnierverbindung 13 aus der in etwa horizontalen Lage in eine nahezu vertikale Lage überführt werden (Fig. 5). Der gesamte Bewegungsvorgang wird durch das Aus- bzw. Einfahren der Kolben-Zylinder-Anordnung 26 ausgeführt.

Obwohl das in den Zeichnungen gezeigte Beispiel eine bevorzugte Ausführungsform darstellt, sind durchaus weitere Modifikationen und Ausführungen möglich. So ist es beispielsweise vorstellbar, daß der hintere Abschnitt 11 der Ablagevorrichtung 12 aus der Arbeits- und Betriebsstellung zunächst in eine an der Unterseite des vorderen Abschnittes 10 anliegende Lage verschwenkt wird, so daß dann beide Abschnitte in die nahezu vertikale Transportstellung überführt werden können. Die Überführung beider Abschnitte der Ablagevorrichtung 12 in die nahezu vertikale Transportstellung kann auch synchron ablaufen.

## Patentansprüche

1. Ballenpresse für landwirtschaftliche Erntegüter zur Erzeugung rechteckiger Ballen (2) mittels einem in einem von einem Gehäuse (9) umgegebenen Preßkanal (5) hin und her bewegbaren Preßkolben (6) und einer sich am Gehäuse (9) des Preßkanals (5) anschließenden, aus zwei oder mehreren Abschnitten (10,11) gebildeten Ablagevorrichtung (12) zur Ablage des Ballens (2) auf dem Erdboden, deren Abschnitte (10,11) untereinander und mit dem Gehäuse (9) des Preßkanals über Scharnierverbindungen (13,14) verbunden sind, wobei ein, entgegen der Preßrichtung (P) des Preßkolbens (6) gesehen, hinterer Abschnitt (11) der Ablagevorrichtung (12) in seiner Scharnierverbindung (14) um eine horizontal und quer zur Preßrichtung (P) ausgerichtete Schwenkachse im Uhrzeigersinn bei einer Betrachtungsweise mit von rechts nach links gerichteter Preßrichtung (P) zum vorderen Abschnitt (10) verschwenkbar ist und zeitlich überlagert oder zeitlich anschließend der vordere Abschnitt (10) mit dem sich der Ober- bzw. Unterseite angenäherten oder an dieser anliegenden hinteren Abschnitt (11) der Ablagevorrichtung (12) aus einer in etwa horizontalen Lage in der weiteren Scharnierverbindung (13) um eine horizontal und quer zur Preßrichtung (P) ausgerichtete Schwenkachse (41) in eine nahezu vertikale Lage überführbar ist, **dadurch gekennzeichnet, daß** der Ablagevorrichtung (12) eine Betätigungsvorrichtung (24) zur Überführung aus einer Arbeits- und Betriebsstellung in eine Transportstellung und zurück aus dieser in eine Arbeits- und Betriebsstellung zugeordnet ist, wobei der hintere Abschnitt (11) der Ablagevorrichtung (12) in seiner Scharnierverbindung mittels eines Koppelgetriebes (18), das den vorderen Abschnitt (10), den hinteren Abschnitt (11) sowie einen mit dem vorderen Abschnitt gelenkig verbundenen Hebel (15) und einen mit dem Hebel (15) sowie dem hinteren Abschnitt (11) gelenkig verbundenen Hebel (16) umfaßt, mit vier Gelenken um die Schwenkachse (40) verschwenkbar ausgebildet ist und daß die Betätigungsvorichtung (24) der Ablagevorrichtung (12) das viergelenkige Koppelgetriebe (18), ein als Antriebsmittel vorgesehenes, eine Zug- und/oder Druckkraft erzeugendes Stellglied (25) und eine als Übertragungsmittels ausgebildete Schubstange (20) aufweist.

2. Ballenpresse nach Anspruch 1, **dadurch gekennzeichnet, daß** die als Übertragungsmittel ausgebildete Schubstange (20) einerseits über eine Langlochführung (21) mit einem Koppelpunkt (23) des vorderen Abschnitts (10) und andererseits mit einem als antreibenden Lenker vorgesehenen Hebel (15) des Koppelgetriebes (18) verbunden ist.

3. Ballenpresse nach Anspruch 1 oder 2, **dadurch gekennzeichnet, daß** das zug- und/oder druckkrafterzeugende Stellglied (25) eine hydraulische Kolben- Zylinder-Anordnung (26) ist.

4. Ballenpresse nach Anspruch 3, **dadurch gekennzeichnet, daß** in einer Zuführleitung (27) der hydraulischen Kolben-Zylinder-Anordnung (26) ein einstellbares Druckbegrenzungsventil (30) vorgesehen ist.

5. Ballenpresse nach einem der Ansprüche 1 bis 4, **dadurch gekennzeichnet, daß** das zug- und/oder druckkrafterzeugende Stellglied (25) ein elektrischer Linearantriebsmotor ist.

6. Ballenpressen nach einem der Ansprüche 1 bis 5, **dadurch gekennzeichnet, daß** die zweiteilige Ablagevorrichtung (12) als eine in Preßrichtung (P) gesehen sich zum Erdboden hin neigende Ballenrutsche mit einer von frei drehbar gelagerten Rollen (35) gebildeten Auflagefläche ausgebildet ist.

## Claims

1. A baling press for harvested agricultural crops, adapted to produce rectangular bales (2) by means of a ram (6) adapted for reciprocating movement in a pressing channel (5) enclosed by a housing (9) and, adjacent to the housing (9) of the pressing channel (5), a set-down device (12) constituted by two or more portions (10, 11) for placing the bale (2) on the ground and the portions (10, 11) of which are connected to each other and to the housing (9) of the pressing channel by hinged joints (13, 14), whereby a (when viewed against the pressing direction (P) of the ram (6) rear portion (11) of the set-down device (12) is adapted to move in its hinged connection (14) about a horizontal pivot axis orientated cross-wise to the pressing direction (P) in the clockwise direction and when viewed with the pressing direction (P) directed from right to left, towards the front portion (10) and, superposed in time or subsequently, the front portion (10) with the rear portion (11) of the set-down device (12), its upper or under side being close to or bearing on this latter, can be moved out of a substantially horizontal position in the further hinged joint (13) about a horizontal pivot axis (41) extending cross-wise to the pressing direction (P) and into an almost vertical position, **characterised in that** associated with the set-down device (12) is an actuating device (24) for transfer out of a working and operating position into a transit position and back out of this latter into a working and operating constituent, whereby the rear portion (11) of the set-down device (12) is, in its hinged joint, constructed to be pivoted about the pivot axis (40) by means of the coupling transmission (18) which comprises the front portion (10), the rear portion (11) and also, articulatingly connected to the front portion, a lever (15) and a lever (16) which is articulated on the lever (15) as well as on the rear portion (11), all four hinged joints pivoting about the said pivot axis (40) and **in that** the actuating device (24) of the set-down device (12) comprises the four-joint coupling transmission (18), a positioning member (25) which generates a traction and/or compression force and which is provided as a drive means and a push rod (20) constructed as a transfer means.

2. A baling press according to claim 1, **characterised in that** the push rod (20) constructed as a transfer means is connected at one end by an elongated hole guide (21) to a coupling point (23) on the front portion (10) and at the other to a lever (15) of the coupling transmission (18) which is provided as a driving link.

3. A baling press according to claim 1 or 2, **characterised in that** the traction and/or compression force generating positioning member (25) is a hydraulic piston-cylinder arrangement (26).

4. A baling press according to claim 3, **characterised in that** an adjustable pressure limiting valve (30) is provided in a feed line (27) to the hydraulic piston cylinder arrangement (26).

5. A baling press according to one of claims 1 to 4, **characterised in that** the traction and/or compression force generating positioning member (25) is an electrically operated linear drive motor.

6. A baling press according to one of claims 1 to 5, **characterised in that** the two part set-down device (12) is constructed as a bale chute which, viewed in the pressing direction (P),is inclined to the ground and has a resting surface formed by freely rotatingly mounted rollers (25).

## Revendications

1. Presse à balles pour des produits agricoles de récolte, pour former des balles rectangulaires (2) comprenant un canal de presse (5) entouré par un carter (9) et recevant un piston de presse (6) mobile alternativement et un canal de presse (5) adjacent au carter (9), un dispositif de dépose (12) formé de deux ou plusieurs segments (10, 11) pour déposer la balle (2) sur le sol, les segments (10, 11) étant reliés entre eux et au carter (9) du canal de presse par les liaisons à charnière (13, 14), et lorsqu'on regarde dans la direction opposée à la direction de presse (P) du piston (6), un segment arrière (11) du dispositif de dépose (12) est monté pivotant par sa liaison à charnière (14) autour d'un axe de basculement horizontal, dirigé transversalement à la direction de presse (P), dans le sens des aiguilles d'une montre lorsqu'on regarde la direction de presse (P) dirigée de la droite vers la gauche, par rapport au segment avant (10) et simultanément ou successivement, le segment avant (10) avec le segment arrière (11) du dispositif de dépose (12), rapproché contre la face supérieure ou inférieure ou appliqué contre celui-ci, passe d'une position sensiblement horizontale dans une autre liaison à charnière (13), autour d'un axe de basculement (41) horizontal, transversal à la direction de presse (P) dans une position pratiquement verticale,
**caractérisée en ce que**
- le dispositif de dépose (12) comporte un dispositif d'actionnement (24) pour passer d'une position de travail et de fonctionnement dans une position de transport et inversement de celle-ci dans la position de travail et de fonctionnement,
- le segment arrière (11) du dispositif de dépose (12) étant réalisé de manière basculante avec quatre articulations autour de l'axe de basculement (40), dans la liaison par charnière du segment arrière par l'intermédiaire d'une transmission de couplage (18) comprenant le segment avant (10), le segment arrière (11) ainsi qu'un levier (15) relié de manière articulée au segment avant et un levier (16) relié de manière articulée au levier (15) ainsi qu'au segment arrière (11), et
- le dispositif d'actionnement (24) du dispositif de dépose (12) comprend la transmission à bielle (18) en forme de quadrangle articulé, un moyen d'entraînement, un organe d'actionnement (25) créant une force de traction et/ou de poussée et une tige poussoir (20) réalisée comme moyen de transmission.

2. Presse à balles selon la revendication 1,
**caractérisée en ce que**
la tige poussoir (20) réalisée comme moyen de transmission est reliée d'un côté par un moyen de guidage à trous oblongs (21) à un point de couplage (23) du segment avant (10) et de l'autre côté avec un levier (15) prévu comme bras à entraîner, de la transmission de couplage (18).

3. Presse à balles selon les revendications 1 ou 2,
**caractérisée en ce que**
l'organe d'actionnement (25) qui génère la force de traction et/ou de poussée est un vérin hydraulique (26).

4. Presse à balles selon la revendication 3,
**caractérisée par**
une soupape des limitation de pression (30), réglable, prévue dans une conduite d'alimentation (27) du vérin hydraulique (26).

5. Presse à balles selon l'une quelconque des revendications 1 à 4,
**caractérisée en ce que**
l'organe d'actionnement (25) générant la force de traction et/ou de pression est un moteur électrique linéaire.

6. Presse à balles selon l'une quelconque des revendications 1 à 5,
**caractérisée en ce que**
le dispositif de dépose (12) en deux parties est une glissière à balles, inclinée vers le sol lorsqu'on regarde dans la direction de presse (P) et ayant une surface d'appui formée par des rouleaux (35) libres en rotation.
